# EUROPEAN PATENT SPECIFICATION

(11) **EP 2 534 213 B1**
(45) Date of publication and mention of the grant of the patent: **30.10.2013**
(21) Application number: 11707737.0
(22) Date of filing: 10.02.2011
(51) Int. Cl.: C09D 133/00, C09J 133/00, C09D 133/02

(54) **PRIMER COATING FOR USE ON SUBSTRATES**
GRUNDIERBESCHICHTUNG FÜR SUBSTRATE
COUCHE D'APPRÊT DESTINÉE À ÊTRE UTILISÉE SUR DES SUBSTRATS

(30) Priority: 12.02.2010 US 303821 P; 09.02.2011 US 201113023826
(43) Date of publication of application: 19.12.2012
(73) Proprietor: Michelman, Inc., Cincinnati, OH 45236 (US)
(72) Inventor: DUCKWORTH, Scot, E., Cincinnati, OH 45236 (US)
(74) Representative: Laenen, Bart Roger Albert
(86) International application number: PCT/US2011/024267
(87) International publication number: WO 2011/100379

(56) References cited:
- EP-A2- 0 347 657
- US-A- 4 459 129
- US-B2- 7 470 736

## Description

Embodiments described herein relate to a primer coating for use on substrates, and more particularly, to a primer coating for enhancing the adhesion of liquid toner to a variety of substrates which are designed to be printed using an electrophotographic printing device.

In recent years, the use of on-demand, high-speed digital printing machines utilizing liquid or dry toners or inks in electrophotographic systems has become widespread. In such systems, toner images are formed on a photosensitive drum and then electrically transferred onto an intermediate transfer blanket or belt for printing on a paper or polymeric film sheet or web. Printers using such toners or inks are commercially available from Hewlett-Packard Company under the trade name HP Indigo. However, as liquid toners do not transfer well and/or adhere well to the films or paper substrates printed on such presses, the substrates are typically treated with a coating or primer to enhance the adhesion of liquid toners thereto.

A number of coatings or primers have been developed for use on substrates such as polymeric films which render the surface of the films more receptive to liquid toners. Typical coatings currently in use have been developed based on ethylene-acrylic acid copolymers. As described in commonly-assigned U.S. Patent No. 7,470,736, one such primer coating includes a copolymer of ethylene and acrylic or methacrylic acid and a compatible adhesion enhancer selected from an aliphatic polyurethane dispersion, a hydrogenated hydrocarbon rosin or rosin ester dispersion, and an amorphous acrylic polymer dispersion. The coating is used to enhance the adhesion of liquid toner to a number of polymeric substrates.

However, the development of newer, high speed digital presses presents new challenges to the use of such primer coatings with regard to ink transfer and adhesion to the substrate. For example, the more recently developed HP Indigo 6000 series of digital presses offer higher speed printing at about twice the speed of previous Indigo presses, resulting in shorter ink transfer times and requiring lower activation temperatures for the primer of about 105°C to 110°C. As a result, substrates coated with typical primers may encounter poor ink transfer as the heat energy at the ink-substrate interface is less than in previous press systems. While it is possible to add heating apparatus to the processing equipment at the point of ink transfer, difficulties remain with the use of thicker substrates such as pressure sensitive label substrates, which comprise many layers.

Accordingly, there is still a need in the art for a primer coating which provides good liquid toner transfer and adhesion to a variety of substrates when used in conjunction with high speed digital presses.

Embodiments of the present invention meet those needs by providing a primer coating for use on a variety of substrates including polymers, metal and paper. The coating provides enhanced liquid toner or ink transfer and adhesion to such substrates, especially those which are printed using high speed electrophotographic printing devices. The coating is also moisture resistant.

According to one embodiment of the invention, a primer coating for enhancing adhesion of liquid toner to a substrate is provided. The primer coating comprises a natural rosin dispersion comprised of a hydrogenated hydrocarbon rosin or rosin ester and a protective colloid forming material, and a dispersion of a copolymer of ethylene and acrylic or methacrylic acid.

The protective colloid forming material is selected from casein, shellac, gum Arabic, xanthum gum, starches, and polyvinylpyrrolidone. The natural rosin dispersion optionally further includes an ethylene acrylic acid copolymer, a metal hydroxide, aqueous ammonia, an amine, or a combination thereof.

The primer coating preferably further includes a wetting agent selected from the group consisting of alcohols and surfactants.

Preferably, the natural rosin dispersion comprises from about 35 to 85% by weight solids and the ethylene acrylic acid copolymer dispersion comprises from about 5 to 60% by weight solids.

The primer coating may be applied to a number of substrates including polymers, biopolymers, metal and paper. The primer coating is preferably applied to a substrate by applying the coating to at least one major surface of the substrate and then preferably drying the coating. Prior to applying the primer coating, it is preferable to use a flame treatment or corona discharge treatment on the substrate, particularly where the substrate has a low surface energy (less than 45 dynes/cm).

Typically, the primer coating is applied to a substrate such that, when dried, it forms a coating having a thickness to provide sufficient print receptivity, which will typically be from about 0.1 to about 2 microns, and more preferably, from about 0.3 to about 0.5 microns to provide sufficient print receptivity. The coated substrate may then be overprinted by applying, e.g., liquid toner from a digital printing apparatus to the primed surface of the substrate.

Accordingly, it is a feature of embodiments of the invention to provide a primer coating and a method of applying the coating to substrates which provides enhanced toner adhesion to the coated substrates when printed with liquid toner inks using high speed electrophotographic printing devices. These, and other features and advantages of the invention will become apparent from the following detailed description and appended claims.

Embodiments of the primer coating provide a number of advantages over prior printer coatings in that enhanced liquid toner adhesion is provided even at high speed digital press operation. By high speed, we mean a linear speed of from about 15 up to about 30 meters/min. In addition, the coating does not require the use of any additional primers or precoatings to achieve proper adhesion to the substrate. The coating may be used in high speed printing operations, particularly in conjunction with the Indigo WS 6000 digital press. The coating provides good ink transfer and adhesion, and a non- blocking surface. By non-blocking, we mean that the coated material can be wound after coating on one surface and can be unwound without causing feeding problems in the printing press.

The coating is environmentally friendly as it is aqueous-based and about 48% of active raw material in the coating comes from renewal resources. The coating may be used for label printing on food packaging as it complies with current FDA regulations for indirect food contact. The coating will also act as a print receptive coating when used to prime substrates which are printed on other well known Indigo presses such as the WS 4000, WS 4500, and the like.

The primer coating comprises a natural rosin dispersion which includes a hydrogenated rosin or rosin ester and a protective colloid forming material such as casein or shellac which is then blended with the dispersion of a copolymer of ethylene and acrylic or methacrylic acid. Use of the natural rosin dispersion provides low temperature activation properties to the coating, which is advantageous for use in the Indigo WS 6000 series of presses. For example, the activation temperature in conventional Indigo WS 4000 series presses is typically between about 140°C and 150°C, while the WS 6000 series of presses have an activation temperature of about 105°C to 110°C.

The protective colloid forming material also provides anti-blocking properties to the coating without detracting from the print receptivity. While casein or shellac are preferred colloid forming materials for use, additional suitable colloid forming materials include, but are not limited to, gum Arabic, xanthum gum, starches, and polyvinylpyrrolidone.

We have found that by combining the natural rosin dispersion with the ethylene acrylic acid dispersion, a high surface energy print receptive thermoplastic coating results which is suitable for heat sealability and is print receptive with regard to waterbased inks, offset lithographic inks, and dry and liquid toners for use in electrostatic printing.

Prior conventional primer formulations have required the use of mineral fillers and/or migratory waxes to overcome the blocking tendency resulting from low activation temperatures. However, the migratory waxes tend to compromise ink adhesion, and the mineral fillers increase the activation temperature significantly. By including a colloid forming material in the coating, the blocking problem is overcome and the coating provides effective print receptivity even at low activation temperatures.

We have also found that dispersions of high density polyethylene materials (such as A-C316 from Honeywell) can also be used as anti-block materials in the formulation (up to about 5% by weight on a solids basis) without affecting the printability of the coated substrate. It should be appreciated that amounts of greater than 5% by weight may adversely affect printability and toner adhesion.

The natural rosin dispersion may further include one or more metal hydroxides for use as antiblocking agents. The coating may include from about 0.05 to 5% by weight metal hydroxides. The metal hydroxides may be added to the formulation as metal ions selected from Group IA, IIA, or IIB of the periodic table. Preferred for use are potassium ions in the form of their hydroxides.

Alternatively, the rosin dispersion may include the use of ammonia as well as primary, secondary or tertiary amines. Preferred for use is ammonia or 2-amino-2-methyl-1 propanol (commercially available from Dow under the designation AMP-95) in amounts of about 0.05% to 5% by weight.

The hydrogenated hydrocarbon rosin or rosin ester in the natural rosin dispersion should preferably have a ring and ball softening point in the range of from about 70°C to 105°C. Suitable rosins for use include natural rosins, which typically include mixtures of resin acids or resin acid derivatives and esters. Examples of resin acids include tricyclic diterpenoids, including pimaranes such as pimaric acid, sandaracopimaric acid, isopimacric acid, *delta*⁸-isopimaric acid, 7,15-pimaradienoic acid, and *delta⁸*-pimaric acid, abietanes such as abietic acid, levopimaric acid, palustric acid, neoabietic acid, dehydroabietic acid, dihydroabietic acid, and tetrahydroabietic acid. Examples of resin acid derivatives include, but are not limited to, rosin esters (such as glycerol ester of rosin acid and pentaerythritol ester of rosin acid), rosin fumarics, rosin maleics, rosin phenolics, fortified rosins, and hydrogenated rosins.

Suitable natural rosins include, but are not limited to, oleoresins, tall oil, wood or gum rosins from tree and plant extrudates, wood extracts, and some tackifying resins. Wood extracts include, but are not limited to, terpenoids including polymers made from monoterpenoids (such as α-pinene, β-pinene, and dipentenes), sesquiterpenoids, diterpenoids (including labdanes), sesterpenoids, triterpenoids, tetraterpenoids, and polyterpenoids.

A preferred hydrogenated rosin for use is a thermoplastic acidic resin which is produced by hydrogenating wood rosin. An example of such a hydrogenated rosin is Foral® AX rosin, available from Eastman, which is suitable for indirect food contact applications. The natural rosin dispersion is preferably prepared by heating the rosin in a pressure vessel under constant agitation together with the other components such that the base reacts with the acid groups on the rosin and upon melting the rosin, forms a colloidal dispersion. The mixture can then be cooled to ambient temperature prior to discharging the dispersion.

Preferably, the natural rosin dispersion comprises about 2 to 5% by weight casein or shellac, from about 30 to 40% by weight of a hydrogenated hydrocarbon rosin or rosin ester, from about 0 to 0.30% by weight sodium chloride, from about 1 to 5% by weight ammonium hydroxide, and the balance water. A preferred casein for use is Casecoat BL330, available from American Casein Co. A preferred shellac is SSB 4560 from Strover Shellaek Bremen. In embodiments where the natural rosin dispersion includes ethylene acrylic acid, preferred for use is Primacor® 5990I, available from Dow Chemical Company. The ethylene acrylic acid may be included in the natural rosin dispersion in amounts of from about 5 to 50% by weight.

Preferably, the ethylene acrylic acid copolymer dispersion comprises from about 65 to 95 wt% ethylene and from about 5 to 35 wt% acrylic or methacrylic acid. The copolymer may have a number average molecular weight of about 2,000 to 180,000. The copolymer is preferably prepared as a dispersion by heating the solid polymer with a water phase in a pressure reactor in the presence of a base such as ammonia such that the base reacts with the acid groups on the polymer, and upon melting, the polymer forms a colloidal dispersion. The primer coating preferably contains from about 30 to 45 wt% of the copolymer dispersion containing 35% by weight total solids. A suitable ethylene acrylic acid dispersion for use in the present invention is commercially available from Michelman under the designation Michem®Prime 4990R.E.

The ethylene acrylic acid dispersion preferably further contains from about 0 to 1% by weight of a wetting agent for reducing the surface tension of the coating to wet out the substrate and to promote flow or leveling of the coating prior to drying. Suitable wetting agents include surfactants and alcohols, such as propylene glycol. A preferred surfactant is Surfynol® 104PG-50, available from Air Products.

Water (preferably soft water) may also be added to the natural rosin and ethylene acrylic acid dispersions to lower the viscosity of the coating and aid in the flow of the coating. The coating may contain from about 0 to 30 wt% of soft water.

Preferably, the natural rosin dispersion and copolymer dispersion are combined by mixing the rosin dispersion with the copolymer dispersion at ambient temperature with a slow speed stirrer.

The resulting primer coating is applied to a substrate in any suitable manner including gravure coating, roll coating, wire rod coating, flexographic printing, spray coating, screen printing, and the like. Preferably, in instances where the substrate has a low surface energy (less than about 45 dynes/cm), the substrate surface should be treated with a flame treatment or corona discharge treatment prior to coating.

The coating composition is preferably applied such that upon drying, the coating forms a smooth, evenly distributed layer of about 0.1 to 2 microns in thickness, and more preferably, from about 0.3 to 0.5 microns in thickness, which provides the desired printability and adhesion properties to the liquid toner ink and the substrate. After the coating is applied, it may be dried by hot air, radiant heat, or any other suitable means which provides a clear, adherent coated film. The dried coating comprises from about 2 to 5 wt% of the colloid forming material, from about 40 to 50 wt% fully hydrogenated rosin, and from about 45 to 55 wt% ethylene acrylic acid copolymer.

The coating demonstrates excellent adhesion of HP Indigo Electroinks® when applied to embossed and/or heavily textured pressure-sensitive paper label substrates as well as polyethylene label stock. By "excellent adhesion," we mean that at least 85% of the printed ink adheres to the substrate when subjected to standard adhesive tape testing.

In order that the invention may be more readily understood, reference is made to the following examples, which are intended to illustrate the invention, but are not to be taken as limiting the scope thereof.

### Example 1

The following rosin dispersion was prepared in a pressure reactor by adding all components and then heating to 140°C under constant agitation until the rosin melted and reacted.

### Rosin Dispersion

| Component | Parts by Weight |
|---|---|
| casein¹ | 3.56 |
| hydrogenated rosin ² | 36.44 |
| sodium chloride | 0.25 |
| 30% ammonium hydroxide solution | 3.36 |
| soft water | 47.39 |

| | |
|---|---|
| ¹ Casecoat BL330 from American Casein Co. ² Foral® AX rosin from Eastman | |

30.87 parts by weight of the rosin dispersion was blended with the following ethylene acrylic acid dispersion.

### Ethylene acrylic acid dispersion

| Component | Parts by Weight |
|---|---|
| ethylene acrylic acid dispersion¹ | 37.55 |
| propylene glycol | 5.0 |
| surfactant² | 0.50 |
| soft water | 26.8 |

| | |
|---|---|
| ¹ Michem®Prime 4990R from Michelman, Inc. ² Surfynol® 104PG from Air Products | |

### Example 2

A rosin dispersion was made by adding the following components to a pressure reactor which was sealed and heated to 140°C under constant agitation until the materials melted and reacted with the base. The pressure vessel was then brought to ambient temperature and 14.28 parts by weight of additional soft water were added to the mixture.

### Rosin Dispersion

| Component | Parts by Weight |
|---|---|
| ethylene acrylic acid¹ | 25.71 |
| hydrogenated rosin ² | 23.14 |
| 30% ammonium hydroxide solution | 3.61 |
| soft water | 56.39 |

| | |
|---|---|
| ¹ Primacor® 5990I (Dow Chemical) ² Foral® AX rosin (Eastman) | |

20 parts by weight shellac (Shellac 4560 from Strover Shellaek Bremen) was dissolved by the addition of 3.7 parts by weight of a 30% ammonium hydroxide solution to obtain a 20% solids content. 84.03 parts of the rosin dispersion was then added to 4 parts by weight of the shellac mixture, 10.97 parts by weight of an ethylene acrylic acid dispersion (Michem®Prime 4990R from Michelman, Inc.) and 1 part by weight of a surfactant (Surfynol® 104PG from Air Products).

### Example 3

The primer formulations of Examples 1 and 2 were applied to a pressure sensitive label stock with a polyethylene face (PE 100 available from Nirotec) at a coat weight of approximately 0.3 to 0.5 dry gsm. For comparison purposes, a conventional ethylene acrylic acid (EAA) coating was applied at the same coat weight. (DigiPrime 2000 from Michelman Inc.) The three samples were then tested for ink adhesion after printing with a IIP Indigo WS 6000 digital printer. Adhesion testing was carried out immediately after printing by applying a 3M 610 adhesive tape to the inked surface and then removing. The results are shown below in Table 1. The % of adhesion is recorded as 100% when no ink is removed by the tape and 0% when all the ink is removed. The tests were performed with the preheater temperature on the WS 6000 press set at the following temperature settings: 45°C, 55 °C, and off. The higher the percent adhesion at the lowest temperature, the better the product performance.

**Table 1**

| Coating | Preheater Temp. (°C) | Percent (%) ink adhesion | | | | | |
|---|---|---|---|---|---|---|---|
| | | Black | Cyan | Magenta | Yellow | CMYK | Average |
| EAA | 45 | 99 | 20 | 70 | 60 | 95 | 69 |
| EAA | 55 | 100 | 93 | 98 | 80 | 99 | 94 |
| Example 1 | off | 80 | 0 | 0 | 0 | 97 | 35 |
| Example 1 | 45 | 98 | 97 | 96 | 73 | 98 | 92 |
| Example 1 | 55 | 99 | 99 | 99 | 100 | 99 | 99 |
| Example 2 | off | 100 | 99 | 99 | 100 | 99 | 99 |
| Example 2 | 45 | | | | | | |
| Example 2 | 55 | 100 | 100 | 100 | 100 | 100 | 100 |

The normal pass/fail mark on these tests is a minimum of 85% adhesion. Thus, based on these tests, the conventional EAA coating on the label stock failed at 45°C preheater settings and failed on yellow ink at the maximum preheater settings. With older generation HP Indigo machines, this is not the case and the conventional coating normally performs without any problems. Both Example 1 and Example 2 demonstrated better adhesion results compared to the conventional EAA coating. Example 1 at a preheater temperature of 55° performed above the pass/fail criteria and Example 2 performed at the same level with the preheater turned off.

Having described the invention in detail and by reference to preferred embodiment thereof, it will be apparent that modifications and variations are possible without departing from the scope of the invention.

## Claims

1. A primer coating for enhancing adhesion of liquid toner to a substrate comprising:
a natural rosin dispersion comprising a hydrogenated hydrocarbon rosin or rosin ester and a protective colloid forming material; and
a dispersion of a copolymer of ethylene and acrylic or methacrylic acid; wherein said coating, when dried, comprises from about 40 to 50 wt% of said hydrogenated hydrocarbon rosin, from about 2 to 5 wt% of said protective colloid forming material; and from about 45 to 55 wt% of said ethylene copolymer.

2. The primer coating of claim 1 wherein said natural rosin dispersion further includes ethylene acrylic acid, a metal hydroxide, aqueous ammonia, an amine, or a combination thereof.

3. The primer coating of claim 1 wherein said protective colloid forming material is selected from casein, shellac, gum Arabic, xanthum gum, starches, and polyvinylpyrrolidone.

4. The primer coating of claim 1 wherein said copolymer dispersion further includes a wetting agent selected from the group consisting of alcohols and surfactants.

5. The primer coating of claim 1 wherein said natural rosin dispersion comprises from about 35 to 85% by weight solids.

6. The primer coating of claim 1 wherein said ethylene acrylic acid copolymer dispersion comprises from about 5 to 60% by weight solids.

7. A method of applying a primer coating for enhancing adhesion of liquid toner to a substrate comprising:
providing a substrate having first and second major surfaces;
providing a primer coating comprising a natural rosin dispersion comprising a hydrogenated hydrocarbon rosin or rosin ester and a protective colloid forming material; and a dispersion of a copolymer of ethylene and acrylic or methacrylic acid; wherein said coating, when dried comprises from about 40 to 50 wt% of said hydrogenated hydrocarbon rosin, from about 2 to 5 wt% of said protective colloid forming material and from about 45 to 55 wt% of said ethylene copolymer; and
applying said coating to at least one major surface of said substrate;

8. The method of claim 7 including treating said at least one major surface of said substrate by a flame treatment or corona discharge treatment prior to applying said primer coating.

9. The method of claim 7 including drying said primer coating after application to said substrate.

10. A coated substrate having first and second major surfaces, with at least one of said major surfaces having coated thereon a primer coating for enhancing adhesion of liquid toner thereto, said dried coating comprising a blend of a natural rosin dispersion comprising from about 40 to 50 wt% of a hydrogenated hydrocarbon rosin or rosin ester and from about 2 to 5 wt% of a colloid forming material; and from about 45 to 55 wt% of a dispersion of a copolymer of ethylene and acrylic or methacrylic acid.

11. The coated substrate of claim 10 wherein said primer coating is about 0.1 to about 2 microns thick.

12. The coated substrate of claim 10 wherein said primer coating is from about 0.3 to about 0.5 microns thick.

## Patentansprüche

1. Eine Grundierung für eine Verbesserung der Haftung von flüssigem Toner auf einem Substrat, bestehend aus: einer natürlichen Kolophonium-Dispersion, welche aus hydriertem Kohlenwasserstoffharz oder Harzester besteht und aus einem Schutzkolloid bildenden Material und
einer Dispersion eines Copolymeren von Ethylen und Acrylsäure oder Methacrylsäure, wobei die erwähnte Beschichtung in getrocknetem Zustand aus etwa 40 bis 50 Gewichtsprozentsätzen (Gew.%) des hydrierten Kohlenwasserstoffharzes, aus etwa 2 bis 5 Gew.% einen Schutzkolloids bildenden Materials und aus etwa 45 bis 55 Gew.% des erwähnten Ethylencopolymers besteht.

2. Die Grundierung nach Anspruch 1, wobei die natürliche Kolophoniumdispersion darüber hinaus noch EthylenAcrylsäure, ein Metallhydroxid, Ammoniak, ein Amin oder eine Kombination davon enthält.

3. Die Grundierung nach Anspruch 1, wobei das ein Schutzkolloid bildende Material aus Kasein, Schellack, Gummi Arabicum, Xanthangummi , Stärke und Polyvinylpyrrolidon selektiert wurde.

4. Die Grundierung nach Anspruch 1, wobei die Copolymer-Dispersion außerdem noch ein Benetzungsmittel enthält, welches aus der Gruppe bestehend aus Alkoholen und Tensiden selektiert wurde.

5. Die Grundierung nach Anspruch 1, wobei die natürliche Harzdispersion etwa 35 bis 85 Gew.% Feststoffe enthält.

6. Die Grundierung nach Anspruch 1, wobei die EthylenAcrylsäure-Copolymer-Dispersion etwa 5 bis 60 Gew.% Feststoffe enthält.

7. Ein Verfahren für das Aufbringen einer Grundierung zur Verbesserung der Haftung von flüssigem Toner auf einem Substrat, bestehend aus:
Der Bereitstellung eines Substrats, die eine erste und zweite Hauptoberfläche hat;
Bereitstellen einer Grundierung, bestehend aus einer natürlichen Colophonium-Dispersion, bestehend aus einem hydrierten Kohlenwasserstoffharz oder Harzester und einem einen Schutzkolloid bildenden Material und einer Dispersion eines Copolymeren von Ethylen und Acrylsäure oder Methacrylsäure, wobei die Beschichtung, in getrocknetem Zustand aus etwa 40 bis 50 Gew.% des hydrierten Kohlenwasserstoffharzes, aus etwa 2 bis 5 Gew.% des Schutzkolloids Materials und aus etwa 45 bis 55 Gew.% des Ethylen-Copolymers besteht und
ein Aufbringen der Beschichtung auf mindestens einer Hauptfläche des Substrats erfolgt;

8. Verfahren nach Anspruch 7, einschließlich des Bearbeitens von mindestens einer Hauptfläche des Substrats durch eine Flammbehandlung oder einer Koronaentladungsbehandlung vor dem Aufbringen der Grundbeschichtung.

9. Ein Verfahren nach Anspruch 7, das auch das Trocknen der Grundierung nach dem Auftragen auf das Substrat beinhaltet.

10. Ein beschichtetes Substrat mit einer ersten und einer zweiten Hauptoberfläche, wobei mindestens eine der Hauptoberflächen mit einer Grundierung zur Verbesserung der Haftung von flüssigem Toner an dieser beschichtet ist, die getrocknete Beschichtung eine Mischung aus einer natürlichen Harzdispersion besteht, die aus etwa 40 bis 50 Gew.% eines hydrierten Kohlenwasserstoffharzes oder Harzesters, aus etwa 2 bis 5 Gew.% eines kolloidalen Materials und aus etwa 45 bis 55 Gew.% einer Dispersion eines Copolymeren von Ethylen und Acrylsäure oder Methacrylsäure besteht.

11. Das beschichtete Substrat nach Anspruch 10, wobei die Grundierung etwa 0,1 bis etwa 2 Mikrometer dick ist.

12. Das beschichtete Substrat nach Anspruch 10, wobei die Primer-Beschichtung eine Dicke von etwa 0,3 bis etwa 0,5 Mikron aufweist.

## Revendications

1. Un premier revêtement pour renforcer l'adhésion d'un toner liquide à un substrat comprenant:
une dispersion de colophane naturelle comprenant une colophane d'hydrocarbone hydrogéné ou un ester de colophane et un colloïde protecteur formant un matériel ; et
une dispersion de copolymère d'éthylène et acrylique ou de l'acide méthacrylique; où ledit revêtement, une fois séché, comprend environ 40 à 50 % en poids de ladite colophane d'hydrocarbone hydrogénée, de 2 à 5 % en poids dudit protecteur colloïde formant un matériel; et environ 45 à 55 % en poids dudit copolymère d'éthylène

2. Le premier revêtement de la revendication 1 où ladite dispersion naturelle de colophane inclut en plus de l'éthylène-acide acrylique, un hydroxyde de métal, de l'ammoniac aqueux, une amine, ou une combinaison de ceux-ci

3. Le premier revêtement de la revendication 1 où ledit protecteur colloïde formant un matériel est sélectionné à partir de la caséine, shellac, de la gomme arabique, de la gomme xanthane, des amidons, et du polyvinylpyrrolidone.

4. Le premier revêtement de la revendication 1 où ladite dispersion de copolymère inclut de plus un agent mouillant sélectionné dans le groupe consistant en alcools et tensioactifs.

5. Le premier revêtement de la revendication 1 où ladite dispersion naturelle de colophane comprend environ 35 à 85 % de poids solides.

6. Le premier revêtement de la revendication 1 où ledit copolymère éthylène-acide acrylique comprend environ 5 à 60 % de poids solides.

7. Une méthode d'application d'un premier revêtement pour renforcer l'adhésion d'un toner liquide à un substrat comprenant :
un substrat ayant une première et une deuxième surface majeures;
un premier revêtement comprenant une dispersion naturelle de colophane comprenant une colophane d'hydrocarbone hydrogénée ou un ester de colophane et un colloïde protecteur formant un matériel; et une dispersion de copolymère d'éthylène et d'acrylique ou d'acide méthacrylique ; où ledit revêtement, une fois séché comprend environ 40 à 50 % en poids de ladite colophane d'hydrocarbone hydrogénée , de 2 à 5 % en poids dudit protecteur colloïde formant un matériel ; et d'environ 45 à 55 % en poids dudit copolymère d'éthylène ; et
en appliquant ledit revêtement à au moins une surface majeure dudit substrat;

8. La méthode de la revendication 7 comprenant un traitement sur au moins une surface majeure dudit substrat par un traitement par flamme ou un traitement par décharge corona avant d'appliquer ledit premier revêtement.

9. La méthode de la revendication 7 comprenant le séchage dudit premier revêtement après l'application dudit substrat.

10. Un substrat revêtu ayant une première et une deuxième surface, avec au moins une des surfaces majeures ayant un revêtement ou un premier revêtement pour renforcer l'adhésion d'un toner liquide où, ledit revêtement séché comprend un mélange d'une dispersion de colophane naturelle comprenant environ 40 à 50 % en poids de colophane d'hydrocarbone hydrogénée ou de l'ester de colophane et environ 2 à 5 % en poids de colloïde formant un matériel ; et environ 45 à 55 % en poids d'une dispersion de copolymère d'éthylène -acrylique et de l'acrylique ou de l'acide méthacrylique.

11. Le substrat revêtu de la revendication 10 où ledit premier revêtement a environ 0.1 à 2 microns d'épaisseur.

12. Le substrat revêtu de la revendication 10 où ledit premier revêtement a une épaisseur d'environ 0.3 à 0.5 microns.
